# EUROPEAN PATENT APPLICATION

(11) **EP 2 256 014 A1**
(43) Date of publication of application: **01.12.2010**
(21) Application number: 09173780.9
(22) Date of filing: 22.10.2009
(51) Int. Cl.: B62B 5/02

(54) **Mobile stairlift device**

(30) Priority: 30.05.2009 IT MC20090131
(71) Applicant: KSP Italia S.r.l., 06031 Bevagna (PG) (IT)
(72) Inventor: Emanuelli, Claudio, 06036, Montefalco (PG) (IT); Bertoldi, Giampiero, 06034, Foligno (PG) (IT); Morbidoni, Francesco, 06030, Giano Dell'Umbria (PG) (IT)
(74) Representative: Cutropia, Gianluigi

(57) **Abstract**

A stairlift device (1) is disclosed comprising: a frame (2) provided with two sides (20) and one base (21) on which support means (7) of a load and control means (8, 80) for the user are mounted, with wheels (R) revolvingly mounted on the frame (2) to roll on the ground, at least one leg (6) connected to the frame (2), one electrical motor (M) mounted on said frame and transmission means (3, 4a, 4b) designed to transmit the motion from the electrical motor (M) to the leg (6). The transmission means (3, 4a, 4b) comprise a gear assembly (3) mounted on each side (20) of the frame, wherein at least one gear (31 a, 31 b) is driven into rotation by a pinion (30) of the electrical motor (M), and one endless drive chain (4a, 4b) driven into rotation by the gears (3) and connected to the leg (6).

## Description

### Mobile stairlift device.

The present patent application relates to a mobile stairlift device, of universal type with wheels.

During the assistance of disabled people or during working or non-working activities that require to move objects, conditions involving a risk for the safety of individuals or properties may arise.

One of these situations is for sure the transportation of people with reduced motorial ability or loads along routes that include a change of level caused by stairs.

The transportation of individuals or properties over the stairs without fixed structures, such as fixed stairlifts or similar equipment or machinery, if exclusively entrusted to the strength and ability of the operator, involves a high risk for the operator, for the transported individual or property and also for the individuals and properties in the surrounding area, mainly because of the possible loss of balance and of the excessive effort required from the operator.

The so-called "mobile lifts" that have been available on the market for a long time are used as aid for transportation of properties and/or individuals over the stairs in order to:
- reduce the effort required from the operator;
- increase the stability of the transported individual and/or load; and
- accelerate transportation operations.

Therefore, it can be said that a mobile stairlift is a product aimed at simplifying the transportation of loads (either properties or individuals) over the stairs between different floors.

These products designed for transportation over the stairs can use different solutions.

A solution consists in transferring the motive power, which is normally provided by a battery-powered electrical motor, to a system with rubber tracks provided with good grip on the stairs, good sliding friction and good stability.

However, the aforesaid systems are impaired by the fact that they are difficult to be manoeuvred on landings and flat routes before or after the stairs, and also in curved routes.

For this reason, other mechanisms have been developed as alternative to tracks.

These mechanisms are based on the use of two wheels with appropriate diameter in which horizontal displacement occurs, without difficulties during manoeuvres in curved routes. Stairlifts with wheels can be manoeuvred by the operator on a flat surface easily, without the use of motive power, or in any case with the use of less energy compared to stairlifts with tracks that are characterised by the high friction caused by the tracks and the motor reducer systems.

In the current state of the art, the lifting/translation movement that is necessary to pass the rise of the step (and consequently travel along the said routes) is obtained by means of two solutions:
1) A transport system obtained with a double cluster of wheels arranged with centres in the vertexes of a triangle. When reaching the tread of a step, the moving wheel touches the rise of the step and rotates with respect to the axis in the centre of the triangle, and the wheel immediately above in the closest vertex of the triangle takes care of the movement.

The above is impaired by the fact that the product is used with difficulties over the stairs with rise not lower than the radius of the wheel or higher than the height of the centre of the triangle with wheels on the vertexes.
2) A transport system obtained by means of a support/lifter actuated with "connecting rod-crank" assembly.

In this case the mobile stairlift is provided with its own fixed wheels for manoeuvring and transportation on a flat surface. A special system is actuated when the wheels touch the rise of a step.

An electrical motor is actuated to transmit motive power to a horizontal axle. The horizontal axle is connected to a crank that actuates a connecting rod provided at the end with a support element, for instance made of rubber. The connecting rod descends, rests on the tread that is currently occupied by the stairlift and lifts the stairlift with load.

During the last part of its travel, the connecting rod makes a translation movement that brings the stairlift on the tread of the step and is then retracted in the original idle position.

The purpose of the present invention is to eliminate the drawbacks of the prior art, devising a mobile stairlift device that is reliable, versatile and simple to use for the operator.

This purpose has been achieved according to the present invention, with the characteristics illustrated in the attached independent claim 1.

Advantageous embodiments are disclosed in the dependent claims. The stairlift device of the invention comprises:
- a frame provided at least with one side and one base, wherein support means of a load and control means for the user are mounted,
- wheels revolvingly mounted on the frame to roll on the ground, and
- at least one leg connected to the frame to pass from a retracted position in which the frame is supported by the wheels that rest on the ground to a position extracted from the frame in which the frame is raised to pass the height of a step,
- an electrical motor mounted on said frame, and
- transmission means designed to transmit motion from the electrical motor to the leg.

The transmission means comprise:
- a gear assembly mounted on at least one of said sides of the frame, wherein at least one gear is driven into rotation by a pinion of the electrical motor, and
- at least one endless drive chain driven into rotation by the gears and connected to the leg.

The presence of the transmission system with gears and chain avoids all the complications of the known transmission systems with crank-connecting rod assembly.

Additional characteristics of the invention will become evident from the detailed description below, which refers to a merely illustrative, not limiting, embodiment, as shown in the enclosed figures, wherein:
Fig. 1 is a perspective view of the frame of the stairlift device according to the invention;
Fig. 2 is a front view of the stairlift device of Fig. 1;
Fig. 3 is a side view of the gears mounted on a side of the stairlift device of Fig. 1;
Fig. 4 is a side view of a leg of the stairlift device according to the invention;
Fig. 5 is a side view of the leg of Fig. 4, mounted on the gears of Fig. 3, in maximum vertical elongation of the leg;
Fig. 6 is the same view as Fig. 5, except for it shows the leg after a roto-translation movement to pass the tread of the step;
Fig. 7 shows five diagrammatic views of the stairlift device of the invention that, from left to right and from up down, show the roto-translation sequence of the leg during the ascending travel and, in the opposite direction, show the roto-translation sequence of the leg during the descending travel;
Fig. shows the legs of the stairlift device in the positions of phase 3 and phase 4 of Fig. 7, wherein the leg of phase 4 is shown with a broken line;
Fig. 9 is a side view of the complete stairlift device, and
Fig. 10 is a side view of the stairlift device of Fig. 9 in configuration for wheelchair, wherein the disabled user and the driver are shown.

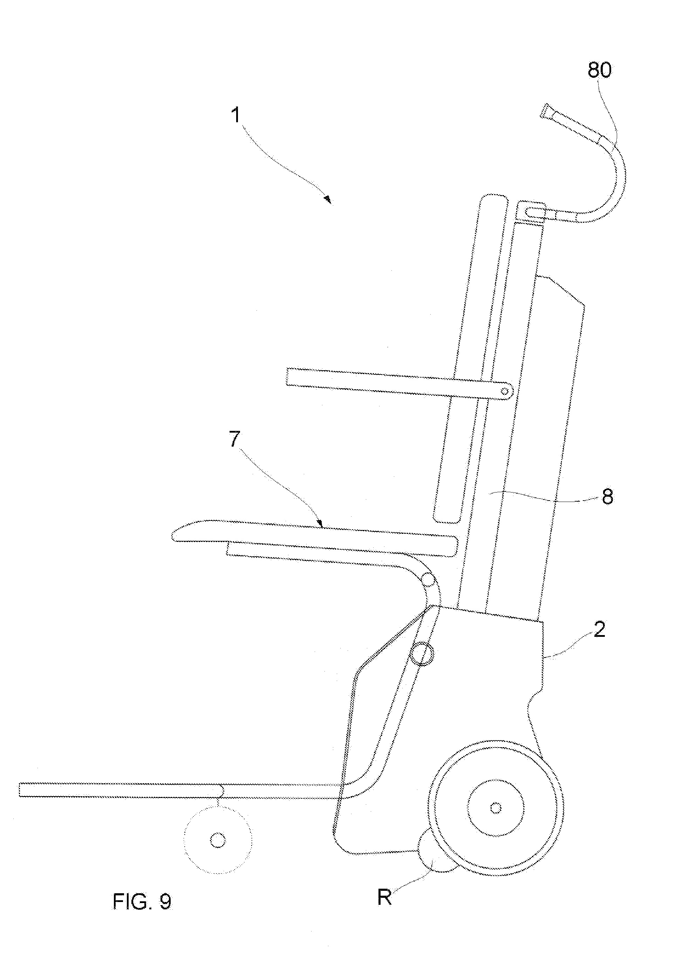

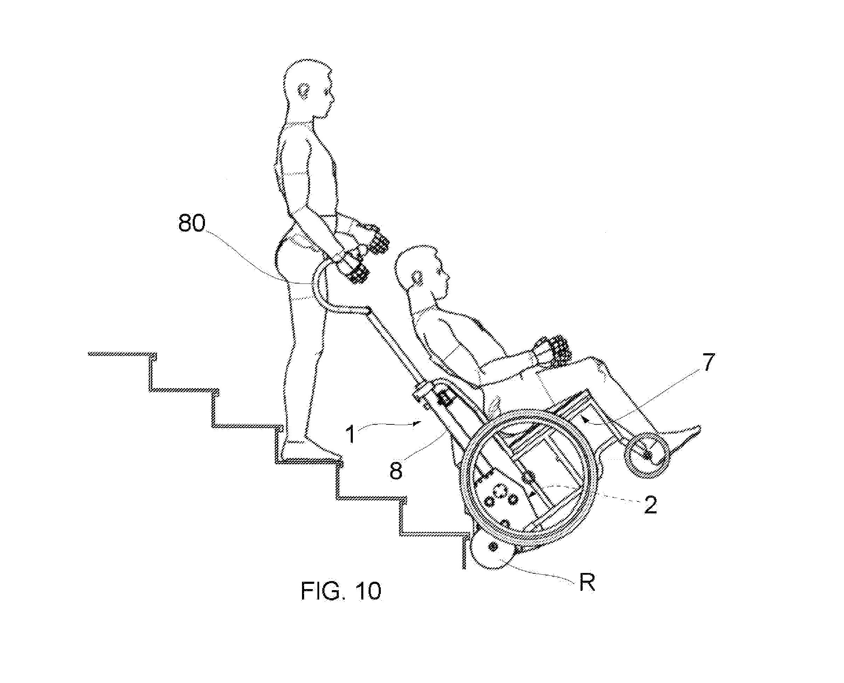

Referring to the figures, the stairlift device of the invention is disclosed, as shown in Figs. 9 and 10 and generally indicated with numeral (1).

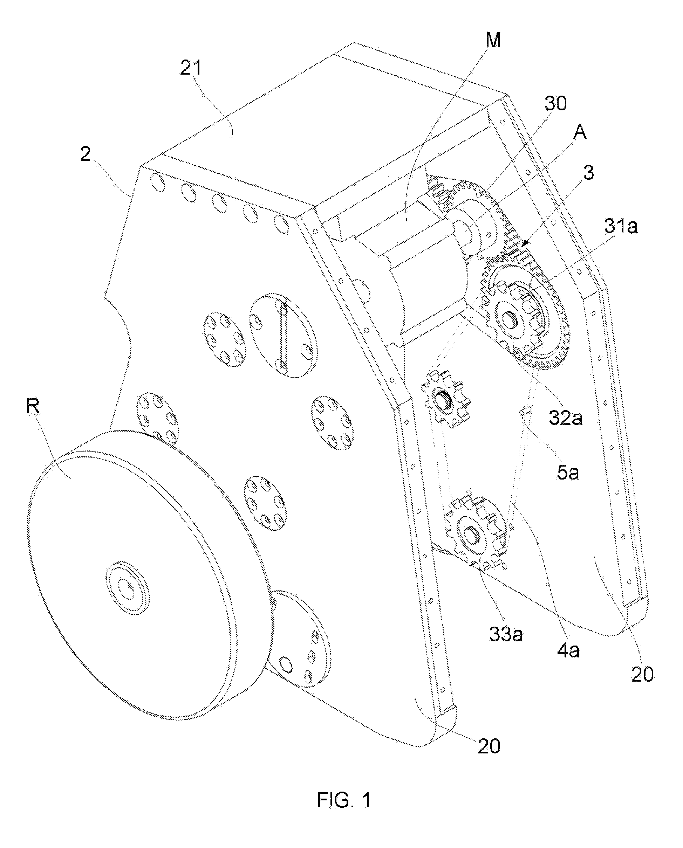

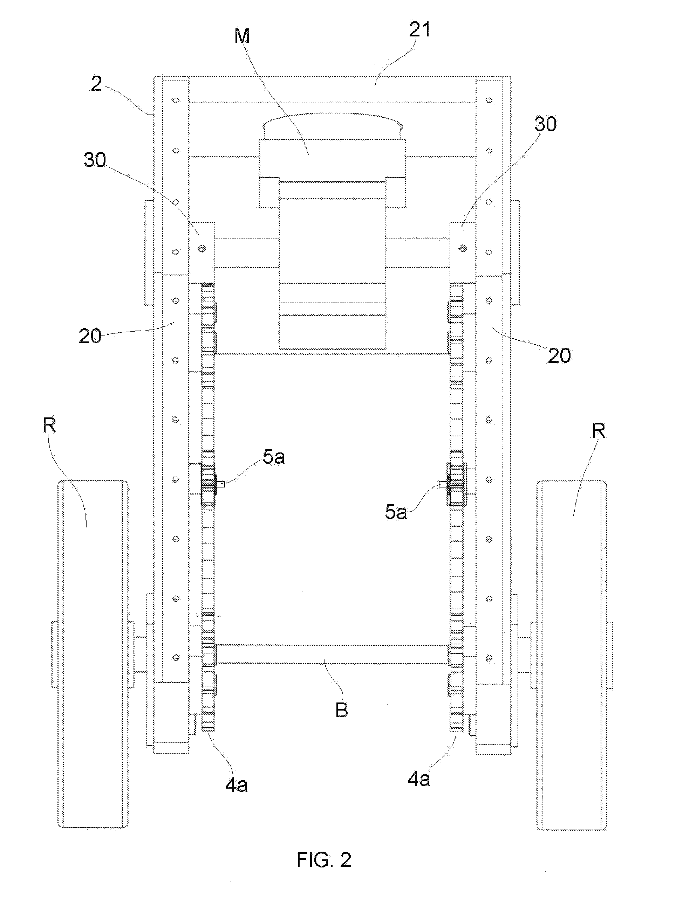

Referring also to Figs. 1 and 2, the stairlift device (1) comprises a boxed bearing frame (2) with overturned U cross-section. The frame (2) comprises two sides (20) connected by an upper base (21). Support means (7) to support loads is mounted on the base (21) of the frame. The support means (7) can be, for instance, a wheelchair. However, the support means (7) can also have a different shape to support objects.

An upright (8) ending with a handle (80) designed to be grabbed by the user that operates the stairlift (1) is mounted on the base (21).

A gear assembly (3) is mounted in the surface facing the inside of each side (20) of the frame. The gears are arranged symmetrically on the two sides (20); therefore, although reference is hereafter made to one side (20) only, it must be considered that the gears can be arranged in symmetrical pairs on the two sides.

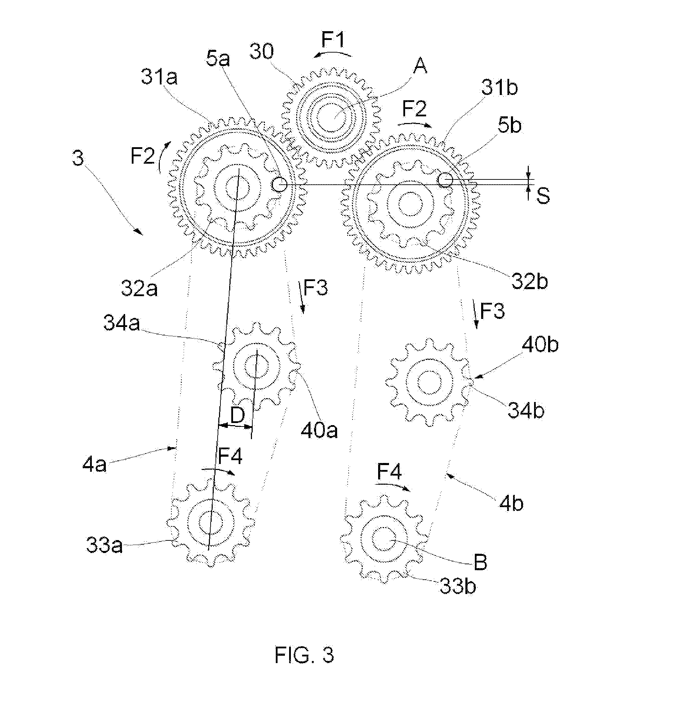

Referring also to Fig. 3, the gear assembly (3) comprises a pinion (30) mounted on the upper central wall of the side (20). The pinion (30) is splined to a drive shaft (A) driven into rotation by an electrical motor (M) arranged in the central upper wall of the frame (2). The electrical motor (M) is powered with a replaceable or rechargeable battery.

The pinion (30) is simultaneously engaged with two toothed wheels (31 a, 31 b) rotatably mounted in the upper part of the side of the frame, in front and back position of the side, respectively. The toothed wheels (31 a, 31 b) are hereinafter defined as toothed driving wheels. Moreover, letter (a) is hereinafter used to identify the element arranged in the front part of the side, whereas letter (b) is used to identify the element arranged in the back part of the side. The terms "front" and "back" refer to a user pushing the stairlift.

Two corresponding toothed wheels (32a, 32b) with lower diameter than the toothed driving wheels (31 a, 31 b) are coaxially splined on the toothed driving wheels (31 a, 31 b). The toothed wheels (32a, 32b) are hereinafter defined as upper toothed wheels.

Additional two toothed wheels (33a, 33b) are mounted in the lower part of the side (20) at a certain distance from the upper toothed wheels (32a, 32b). The toothed wheels (33a, 33b) are hereinafter defined as lower toothed wheels. The lower toothed wheels (33a, 33b) basically have the same diameter as the upper toothed wheels (32a, 32b).

In particular, the back lower toothed wheel (33b) is rotatably mounted on a non-rotatable shaft (B) that crosses the sides (20) of the frame (Fig. 2) to be connected with two rotatable wheels (R) arranged outside the sides of the frame in such a way that the frame (2) can be supported by the wheels (R). Obviously, the wheels (R) can be rotatably mounted on a shaft fixed to the frame other than the shaft that supports the back lower toothed wheels (33b).

Endless drive chain means (4a, 4b) are mounted on the upper (32a, 32b) and lower (33a, 33b) toothed wheels to transmit a rotational movement from the upper toothed wheels (32a, 32b) to the lower toothed wheels (33a, 33b). This defines a front chain (4a) and a back chain (4b).

A connection pin (5a, 5b) is mounted in each chain (4a, 4b), extending towards the inside in orthogonal direction to the sides (20).

In particular, the chains (4a, 4b) are adjusted in such a way that the pin (5a) of the front chain (4a) is slightly anticipated with respect to the pin (5b) of the back chain (4b). The said anticipation is fixed by arranging the pins (5a, 5b) on the same horizontal plane and making only the front toothed driving wheel (31 a) rotate, for example, by three teeth with respect to the pinion (30). Consequently, with reference to Fig. 3, the horizontal planes passing through the axis of the pins (5a, 5b) are spaced by a distance (S) that defines the anticipation of the front pin (5a) with respect to the back pin (5b).

Two intermediate toothed wheels (34a, 34b) are mounted on the side (20) and arranged between the upper (32a, 32b) and lower (33a, 33b) toothed wheels. The intermediate toothed wheels (34a, 34b) have the same diameter as the upper (32a, 32b) and lower (33a, 33b) toothed wheels. The axis of the intermediate toothed wheels (34a, 34b) is moved backwards with respect to the straight line that joins the centres of the upper (32a, 32b) and lower (33a, 33b) toothed wheels. Referring to Fig. 3, (Δ) indicates the distance between the centre of the intermediate toothed wheel (34a) and the straight line that joins the centres of the upper (31 a) and lower (33a) toothed wheel.

In view of the above, the chains (4a, 4b) have a backward protruding section (40a, 40b) in the back, in correspondence with the intermediate toothed wheels (34a, 34b).

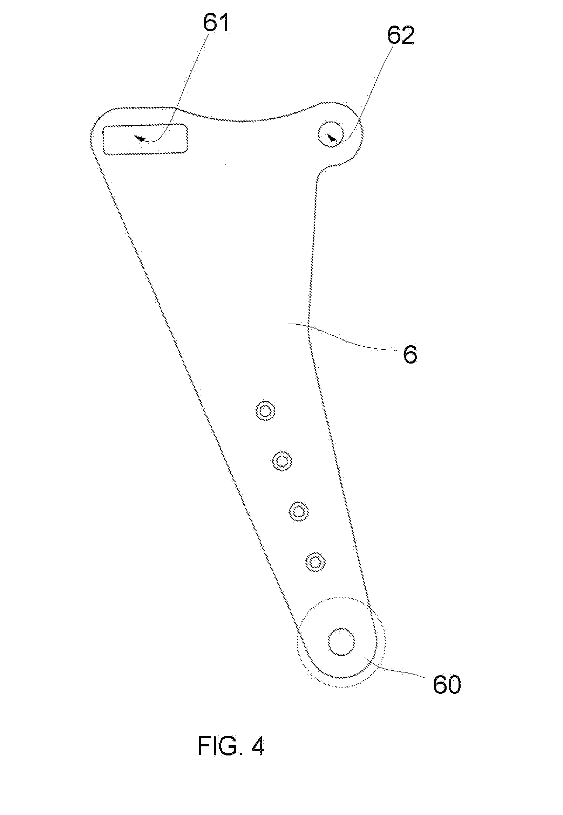

Fig. 4 illustrates a leg (6) of the stairlift device. The leg (6) is provided at the lower end with a foot (60), which consists for example in a rubber element, adapted to rest on the ground while generating some friction. The upper part of the leg (6) is provided with a slot (61) and a hole (62). The slot (61) is arranged in front of the hole (62).

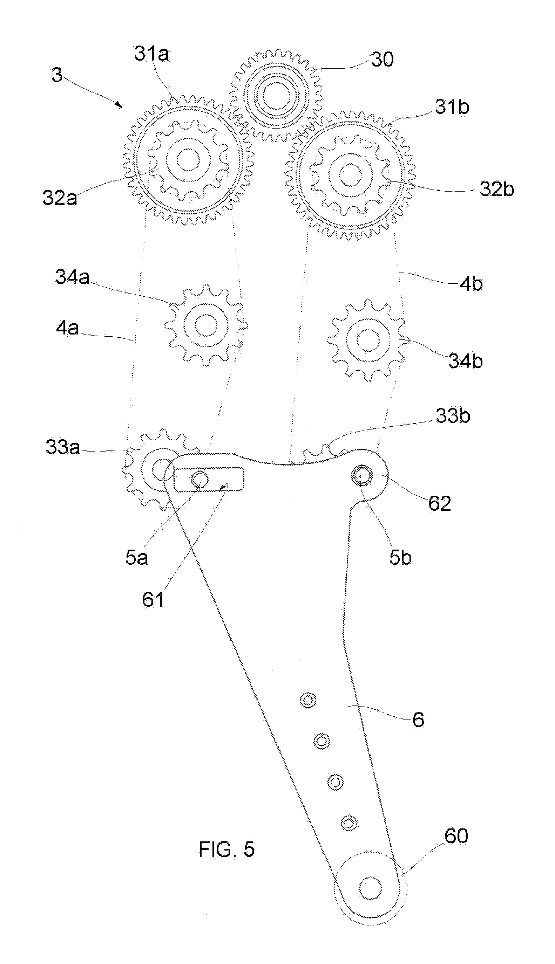

As shown in Fig. 5, the front connection pin (5a) of the front chain (4a) is inserted in the slot (61) of the leg, in such a way to slide inside it. The back connection pin (5b) of the back chain (4b) is hinged inside the hole (62) of the leg. In view of the above, the leg (6) is connected to the frame (2) by means of the front (4a) and back (4b) chains. Although one leg (6) has been illustrated, it appears evident that the stairlift device can be provided with two legs that are mutually joined and connected to the pins of the two sides.

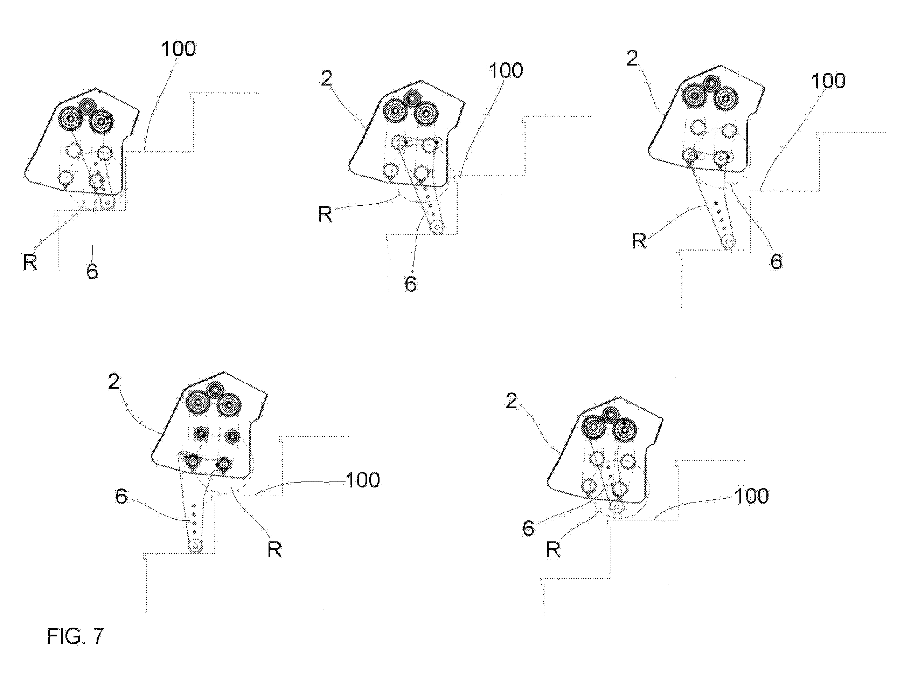

The operation of the stairlift device of the invention is illustrated hereinafter, with special reference to Fig. 7.

In the initial situation (Phase 1 of Fig. 7) the wheels (R) rest and roll on the ground until they touch the vertical wall of a step (100). The leg (6) is retracted inside the frame (2) in order not to interfere with the ground. The connection pins (5a, 5b) are situated in upper position inside the frame (2), as shown in Fig. 3.

Referring to Fig. 3, when the electrical motor (M) is actuated, the pinion (30) rotates in the direction of the arrow (F1) and drives the toothed driving wheels (31 a, 31 b) into rotation in the direction of the arrows (F2). In view of the above, the chains (4a, 4b) rotate in the direction of the arrows (F3) and the lower toothed wheels (33a, 33b) rotate in the direction of the arrows (F4).

In view of the above, the pins (5a, 5b) tend to descend downwards dragging the leg (6) that starts resting on the ground and raising the frame (2) in a practically vertical direction.

As shown in Phase 2 of Fig. 7, when the pins (5a, 5b) are halfway the lifting travel of the frame, they reach the intermediate toothed wheels (34a, 34b). Consequently, when passing from phase 1 to phase 2, the pins (5a, 5b) travel along an inclined section of the chain, moving the frame away from the step (100) in such a way that the frame does not interfere with the corner of the step that protrudes generally.

During the following ascending section of the frame (2), from phase 2 to phase 3, the frame continues on raising, moving closer to the step (100), because the pins (5a, 5b) travel along the inclined section that goes from the intermediate toothed wheels (34a, 34b) to the lower toothed wheels (33a, 33b) with opposite inclination with respect to the first inclined section that goes from the upper toothed wheels (32a, 32b) to the intermediate toothed wheels (34a, 34b). The displacement of the frame towards the step allows the wheels (R) to pass the corner of the step (100).

Therefore, the distance (Δ) between the centre of the intermediate toothed wheels (34a, 34b) and the straight line that joins the centres of the upper (31 a, 31 b) and lower (33a, 33b) toothed wheels is dimensioned according to the dimensions of the corner of the step to be passed.

In Phase 3 of Fig. 7, the leg (6) is in maximum vertical elongation; in fact, the wheels (R) are arranged above the level of the tread of the step (100). This situation is illustrated in Fig. 5, wherein the two pins (5a, 5b) are arranged on the back of the lower toothed wheels (33a, 33b).

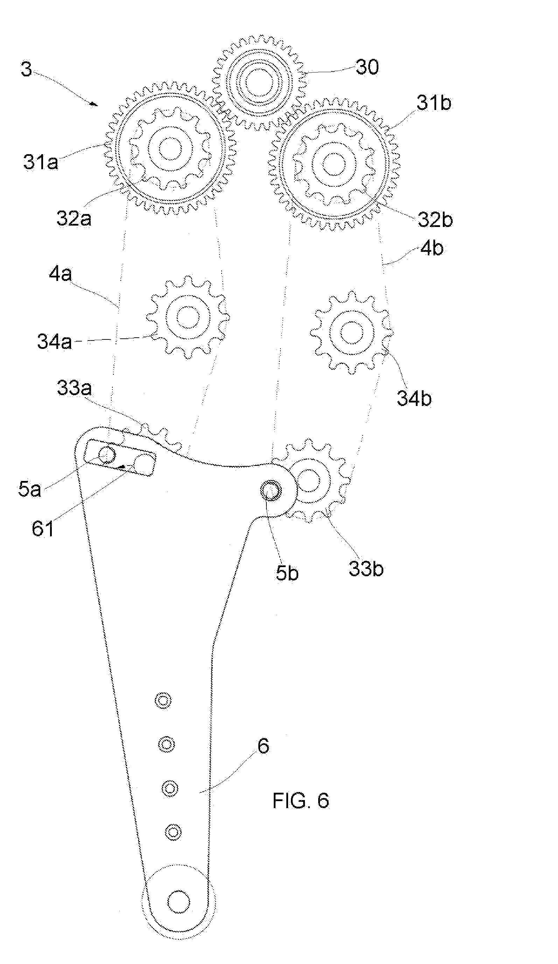

Now, the frame (2) must be moved forwards (towards the step) so that the wheels (R) are positioned above the tread of the step (100), as shown in Phase 4 of Fig. 7. This situation is illustrated in Fig. 6, wherein the two pins (5a, 5b) have travelled for half a revolution of the lower toothed wheels (33a, 33b) and are arranged on the front of the lower toothed wheels (33a, 33b). The movement of the pins (5a, 5b) causes a rotation of the leg (6) and a forward translation of the frame (2) so that the wheels (R) are arranged on the step (100).

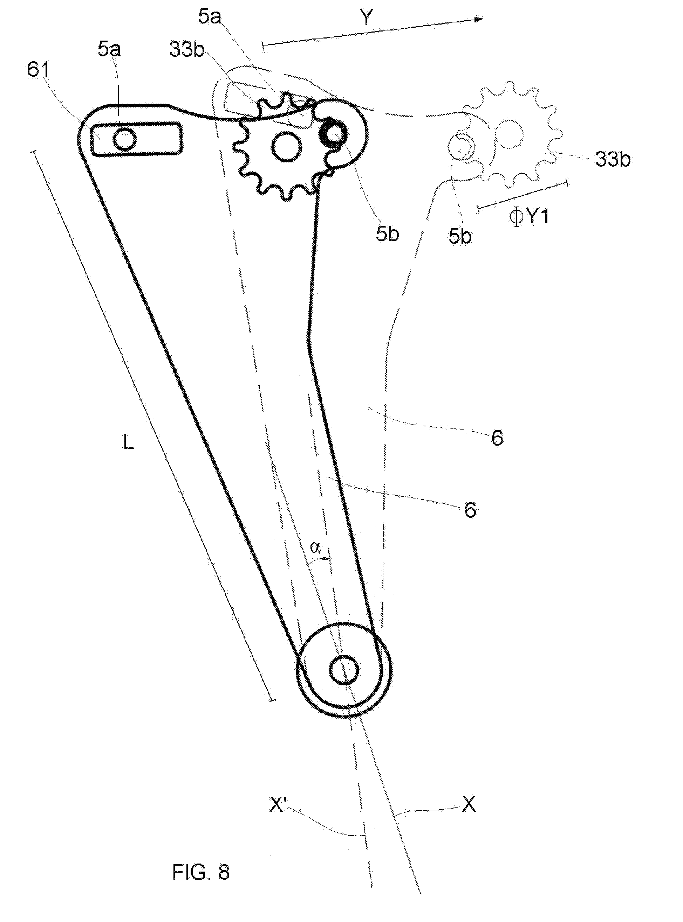

As shown in Fig. 8, when passing from phase 3 to phase 4 of Fig. 7, the frame (2) is moved forward by a distance Y = y1 +y2
wherein
y1 = Φ = reference diameter of the lower toothed wheel (33b)
y2 = L * sen(α)
wherein
L = length of leg (6)
α = angle of rotation of leg (6)

Referring to Fig. 8, (X) is the axis of the leg in phase 3; (X') is the axis of the leg in phase 4; and (α) is the angle between (X) and (X').

It must be noted that the angle of rotation (α) of the leg is determined by the fact that the front pin (5a) is anticipated with respect to the back pin (5b) and by the fact that the front pin (5a) can slide inside the slot (61) of the leg.

In fact, if the front pin (5a) was on the same horizontal plane (not anticipated) as the back pin (5b), the forward movement of the frame would be Y = y1 = Φ. Then, lower toothed wheels (33a, 33b) with excessively large diameter (Φ) should be provided to allow for a forward movement suitable for passing a step.

Advantageously, the anticipation of the front pin (5a) with respect to the back pin (5b), that is to say the distance (S) between the horizontal planes passing through the axis of the pins (5a, 5b) is selected according to the forward movement (Y) of the frame to be obtained and according to the diameter (Φ) of the lower toothed wheels (33a, 33b).

Finally, Fig. 7 illustrates phase 5, wherein the leg (6) is retracted inside the frame (2) (i.e. the frame (2) is lowered), because the pins (5a, 5b) travel along the front section that goes from the lower toothed wheels (33a, 33b) to the upper toothed wheels (32a, 32b).

Numerous variations and modifications can be made to the present embodiment of the invention by an expert of the field, while still falling within the scope of the invention as claimed in the enclosed claims.

## Claims

1. Stairlift device (1) comprising:
- a frame (2) with at least a side (20) and a base (21), provided with support means of a load and control means for the user,
- wheels (R) mounted on the frame (2) to roll on the ground,
- at least a leg (6) connected to the frame (2) to pass from a retracted position in which the frame (2) is supported by the wheels (R) that rest on the ground to a position extracted from the frame in which the frame (2) is raised to pass the height of a step (100),
- an electrical motor (M) mounted in the said frame, and
- transmission means (3, 4a, 4b) designed to transmit motion from the electrical motor to the leg (6),
**characterised in that**
the said transmission means (3, 4a, 4b) comprise:
- a gear assembly (3) mounted on at least one of the said sides (20) of the frame, in which at least a gear (31 a, 31 b) is driven into rotation by a pinion (30) of the electrical motor (M), and
- at least an endless drive chain (4a, 4b) driven into rotation by the gears (3) and connected to the leg (6).

2. Stairlift device (1) as claimed in claim 1, **characterised in that** the chain drive means comprise:
- a front chain (4a) that rotates around at least two gears (32a, 33a, 34a) in the front part of at least one side (20) of the frame, and
- a back chain (4b) that rotates around at least two gears (32b, 33b, 34b) in the back part of at least one side (20) of the frame.

3. Stairlift device (1) as claimed in claim 2, **characterised in that** the front chain (4a) and the back chain (4b) comprise respectively a front pin (5a) and a back pin (5b) hinged to the leg (6).

4. Stairlift device (1) as claimed in claim 3, **characterised in that** the front pin (5a) is anticipated with respect to the back pin (5b) with reference to the direction of rotation of the chains (4a, 4b) and the said front pin (5a) being slidingly arranged inside a slot (61) obtained in the leg (6).

5. Stairlift device (1) as claimed in any of claims 2 to 4, **characterised in that** the gears (3) on at least one side comprise:
- a front upper toothed wheel (32a) and a front lower toothed wheel (33a) on which the said front chain (4a) rotates, and
- a back upper toothed wheel (32b) and a back lower toothed wheel (33b) on which the said back chain (4b) rotates.

6. Stairlift device (1) as claimed in claim 5, **characterised in that** the upper toothed wheels (32a, 32b) are splined on toothed driving wheels (31 a, 31 b) with larger diameter that engage simultaneously in the said pinion (30) connected to the drive shaft (A) of the electrical motor (M).

7. Stairlift device (1) according to claim 5 or 6, **characterised in that** it comprises a shaft (B) non-rotatably mounted in the internal part of the sides of the frame where the back lower toothed wheels (33b) and the wheels (R) are rotatably mounted.

8. Stairlift device (1) as claimed in any of claims 5 to 7, **characterised in that** it comprises:
- a front intermediate toothed wheel (34a) arranged between the front upper (32a) and front lower (33a) toothed wheels, and
- a back intermediate toothed wheel (34a) arranged between the back upper (32b) and back lower (33b) toothed wheels,
in which the diameters of the upper, lower and intermediate toothed wheels are basically identical and the axis of each intermediate toothed wheel (34a, 34b) is situated at a distance (all) with respect to the straight line that joins the centres of the corresponding upper (31 a, 31 b) and lower (33a, 33b) toothed wheels.
